# EUROPÄISCHE PATENTSCHRIFT

(11) **EP 3 655 796 B1**
(45) Veröffentlichungstag und Bekanntmachung des Hinweises auf die Patenterteilung: **27.10.2021**
(21) Anmeldenummer: 18729422.8
(22) Anmeldetag: 06.06.2018
(51) Int. Cl.: G01S 7/40, G01S 13/93, G06T 7/80, G06T 7/73

(54) **KALIBRIEREINRICHTUNG UND VERFAHREN ZUM KALIBRIEREN VON KRAFTFAHRZEUG-UMFELDSENSOREN**
CALIBRATION DEVICE AND METHOD FOR CALIBRATING MOTOR VEHICLE ENVIRONMENT SENSORS
DISPOSITIF D'ÉTALONNAGE ET PROCÉDÉ POUR ÉTALONNER DES CAPTEURS D'ENVIRONNEMENT DE VÉHICULE AUTOMOBILE

(30) Priorität: 18.07.2017 DE 102017212289
(43) Veröffentlichungstag der Anmeldung: 27.05.2020
(73) Patentinhaber: Robert Bosch GmbH, 70442 Stuttgart (DE)
(72) Erfinder: UFFENKAMP, Volker, 71642 Ludwigsburg (DE)
(86) Internationale Anmeldenummer: PCT/EP2018/064880
(87) Internationale Veröffentlichungsnummer: WO 2019/015847

(56) Entgegenhaltungen:
- EP-A2- 1 953 518
- EP-A2- 2 233 365

## Beschreibung

Die Erfindung betrifft eine Kalibriereinrichtung und ein Verfahren zum Kalibrieren von Kraftfahrzeug-Umfeldsensoren

### Stand der Technik

Moderne Kraftfahrzeuge sind häufig mit Fahrerassistenzsystemen ausgestattet, beispielsweise mit einem automatischen Abstandswarner und/oder -halter, einem Spurhalteassistenten, einer Spurwechselwarnung ("lane change warning"), einer Spurverlassenswarnung ("lane departure warning"), und/oder einer Einparkhilfe.

Um eine zuverlässige Funktion der Fahrerassistenzsysteme zu gewährleisten, ist es erforderlich, dass die Sensoren der Fahrerassistenzsysteme, beispielsweise Kameras und/oder Radarsensoren, ein präzises, gut mit der Realität übereinstimmendes und korrekt auf das Fahrzeug ausgerichtetes Bild der Umgebung des Fahrzeugs liefern. Hierfür müssen die Sensoren der Fahrerassistenzsysteme kalibriert werden, insbesondere relativ zur Bewegungsbahn des Fahrzeugs. Diese Kalibrierungsvorgänge und die hierfür notwendigen vorbereitenden Schritte, wie z.B. die Bestimmung der Positionierung und der Ausrichtung der Fahrerassistenzsystem-Sensoren zu dem Fahrzeug, sind in der Praxis häufig sehr aufwändig.

Aus dem Dokument EP 1953518 A2 ist ein Prüfstand zum Kalibrieren von Fahrzeugumfeldsensoren bekannt, wobei die Messmerkmale auf der Karosserie angebracht werden. Aus dem Dokument EP 2233365 A2 ist ein Verfahren bekannt, um die Position und die Ausrichtung einer Kamera eines Fahrerassistenzsystems eines Fahrzeuges zu bestimmen.

### Offenbarung der Erfindung:

Es ist daher eine Aufgabe der vorliegenden Erfindung, die Kalibrierung von Fahrerassistenzsystemen, insbesondere von Fahrerassistenzsystem-Sensoren, zu vereinfachen.

Gemäß einem Ausführungsbeispiel der Erfindung umfasst eine Kalibriereinrichtung zum Kalibrieren von Kraftfahrzeug-Umfeldsensoren mit den Merkmalen gemäß Anspruch 1.

Ausführungsbeispiele der Erfindung umfassen auch einen Messplatz zum Kalibrieren von Kraftfahrzeug-Umfeldsensoren mit einer auf dem Messplatz angeordneten Kalibriereinrichtung, die gemäß einem Ausführungsbeispiel der Erfindung ausgebildet ist.

Gemäß einem Ausführungsbeispiel der Erfindung umfasst ein Verfahren zum Kalibrieren von Kraftfahrzeug-Umfeldsensoren die Merkmale gemäß Anspruch 5.

Das erfindungsgemäße Verfahren zum Kalibrieren von Kraftfahrzeug-Umfeldsensoren,umfasst, eine erfindungsgemäße Kalibriereinrichtung auf einem Messplatz zu platzieren, welche gemäß einem Ausführungsbeispiel der Erfindung ausgebildet ist; ein Kraftfahrzeug mit wenigstens einem Kraftfahrzeug-Umfeldsensor auf dem Messplatz zu platzieren; mehrere Messpunkte als Messmerkmale derart auf dem Fahrzeug anzubringen, dass sie von der wenigstens einen Kamera der Kalibriereinrichtung optisch erfassbar sind, wobei sich ein Messmerkmal auf der Messtafel befindet, die am Rad adaptiert wird; mit der wenigstens einen Kamera der Kalibriereinrichtung wenigstens ein Bild der an dem Fahrzeug vorhandenen Messmerkmale aufzunehmen; und durch Auswerten der von der wenigstens einen Kamera aufgenommenen Bilder die Position der Kalibriereinrichtung in Bezug auf das Kraftfahrzeug zu bestimmen.

Mit Hilfe der von der wenigstens einen Kamera aufgenommenen Bilder kann die Position der Kalibriereinrichtung im Raum bestimmt werden.

Da die Position und die Ausrichtung des Targets gegenüber der Kamera fest und bekannt sind, können die Position und die Ausrichtung des Targets im Raum bestimmt werden, wenn die Position und die Ausrichtung der Kamera bekannt sind.

Dadurch, dass die Kamera Bestandteil der Kalibriereinrichtung ist, kann der Platzbedarf gegenüber Konfigurationen, in denen die Kamera separat von der Kalibriereinrichtung am Messplatz angeordnet ist und sowohl das Target als auch das Kraftfahrzeug erfasst, deutlich reduziert werden. Mit einer erfindungsgemäßen Kalibriereinrichtung kann die Kalibrierung daher auch auf kleinen Messplätzen und in kleinen Werkstätten durchgeführt werden.

In einer Ausführungsform umfasst das Verfahren zusätzlich, das Fahrzeug relativ zur der Kalibriereinrichtung zu bewegen; mit der wenigstens einen Kamera der Kalibriereinrichtung zu verschiedenen Zeitpunkten der Fahrzeugbewegung wenigstens zwei Bilder des auf dem Fahrzeug angebrachten wenigstens einen Messpunktes aufzunehmen; und durch Auswerten der von der wenigstens einen Kamera aufgenommenen Bilder des wenigstens einen an dem Fahrzeug angebrachten Messpunktes die Bewegungsbahn des Fahrzeugs gegenüber der Kalibriereinrichtung zu bestimmen.

Durch Vergleichen der auf diese Weise gewonnen Daten mit den von dem Kraftfahrzeug-Umfeldsensor gelieferten Daten können Abweichungen der Position und der Ausrichtung des Kraftfahrzeug-Umfeldsensors von vorgegebenen Solldaten bestimmt werden, und der Kraftfahrzeug-Umfeldsensor kann justiert und kalibriert werden.

In einer Ausführungsform umfasst das wenigstens eine Target eine Reflektorebene, die zur Reflexion elektromagnetischer Strahlung, insbesondere von Radarstrahlung, ausgebildet ist. Ein solches Target kann zum Kalibrieren von Sensoren, die elektromagnetische Strahlung detektieren, insbesondere von Radarsensoren, eingesetzt werden.

In einer Ausführungsform umfasst das wenigstens eine Target eine Musterplatte, auf der ein optisch erfassbares Muster, insbesondere ein Passpunktmuster, ausgebildet ist. Ein solches Target kann zum Kalibrieren optischer Sensoren, wie z.B. Kameras, eingesetzt werden.

In einer Ausführungsform ist die wenigstens eine Kamera ausgebildet und ausgerichtet, Bilder von Messmerkmalen aufzunehmen, die auf dem Messplatz, insbesondere auf dem Boden des Messplatzes, ausgebildet sind.

Die Messmerkmale können künstliche Merkmale sein, wie zum Beispiel retroreflektierende Messpunkte in Form ebener Kreismarken oder Kugeln, die von der Kamera besonders gut detektierbar sind und aufgrund ihrer definierten Geometrie Vorteile bezüglich der Messgenauigkeit bieten.

Auf diese Weise können die Position und die Ausrichtung der Kalibriereinrichtung in Bezug auf den Messplatz bestimmt werden. Die Messmerkmale können insbesondere in Form eines Passpunktsystems angeordnet sein.

Die wenigstens eine Kamera ist ausgebildet und ausgerichtet, Bilder von Messmerkmalen aufzunehmen, die auf einem vor der Kalibriereinrichtung angeordneten Fahrzeug ausgebildet sind. Die Messmerkmale können Merkmale oder Muster des Fahrzeugs, insbesondere der Karosserie, wie z.B. Schrauben, Bohrungen, Kontraststellen, usw. oder gezielt an dem Fahrzeug angebrachte Messpunkte sein.

Erfindungsgemäß ist wenigstens ein Messmerkmal an wenigstens einem der Räder des Fahrzeugs angebracht. Dies ermöglicht es, zusätzlich zur Bewegungsbahn weitere geometrische Informationen, wie z.B. die Position oder die Ausrichtung des Rades, zu bestimmen.

Die Messmerkmale befinden sich in Form von Messpunkten auf einer Messtafel, die am Rad adaptiert wird.

Erfindungsgemäß sind die Messpunkte als Kugeln ausgelegt, so dass sie unabhängig vom Raddrehwinkel von der Kamera erfasst werden. Damit sind längere Fahrwege des Fahrzeugs möglich.

Durch Auswerten der Bewegungsbahn eines an einem sich bewegenden Fahrzeug vorhandenen Messmerkmals kann die Ausrichtung der Fahrachse des Fahrzeugs gegenüber der Kalibriereinrichtung bestimmt werden, so dass ein Kraftfahrzeug-Umfeldsensor in Bezug auf die Fahrachse des Fahrzeugs ausgerichtet werden kann.

Sind auf dem Fahrzeug mehrere Messmerkmale vorhanden, die in Form eines Passpunktsystems angeordnet sind, können auch die Position und die Ausrichtung der Kalibriereinrichtung in Bezug auf das Kraftfahrzeug bestimmt werden.

Ein Ausführungsbeispiel der Erfindung wird im Folgenden unter Bezugnahme auf die beigefügten Figuren beschrieben.

### Kurze Beschreibung der Figuren

Figur 1 zeigt einen Messplatz zum Kalibrieren von Kraftfahrzeug-Umfeldsensoren mit einer auf dem Messplatz angeordneten Kalibriereinrichtung gemäß einem ersten Ausführungsbeispiel der Erfindung.
Figur 2 zeigt einen Messplatz zum Kalibrieren von Kraftfahrzeug-Umfeldsensoren mit einer auf dem Messplatz angeordneten Kalibriereinrichtung gemäß einem zweiten Ausführungsbeispiel der Erfindung.

### Figurenbeschreibung

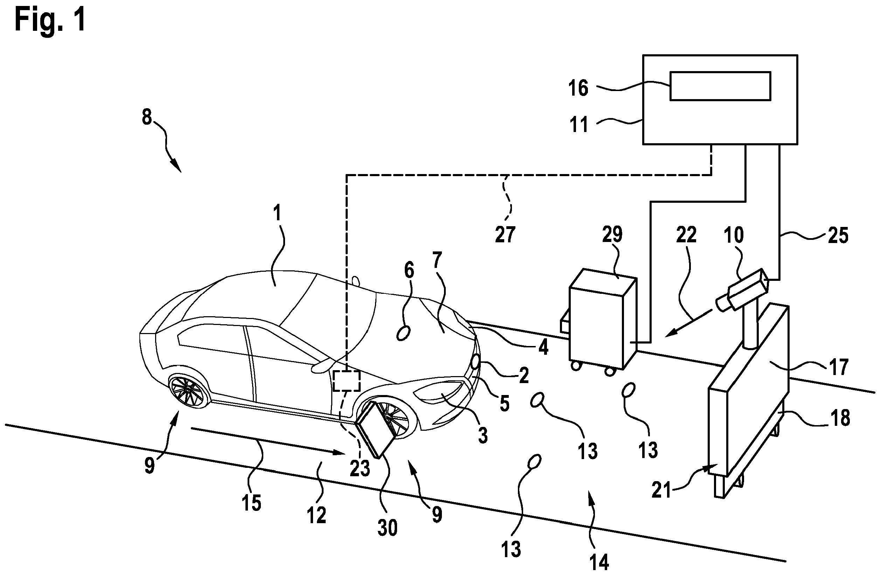

Figur 1 zeigt in einer schematischen perspektivischen Darstellung ein Fahrzeug 1 mit einem zu kalibrierenden Kraftfahrzeug-Umfeldsensor 2, beispielsweise einem Abstandssensor 2, und zwei Scheinwerfern 3 und 4 in einem Frontbereich 5 des Fahrzeugs 1. Auf einer Motorhaube 7 des Fahrzeugs 1 ist ein Messmerkmal 6 ausgebildet oder angebracht.

Das wenigstens eine Messmerkmal 6 ist an wenigstens einem der Räder 9 des Fahrzeugs 1 angebracht sein, um (zusätzlich zur Bewegungsbahn) weitere geometrische Informationen wie die Position oder die Ausrichtung des Rades 9 bestimmen zu können.

Messmerkmale 6 in Form von Messpunkten 6 können direkt an einem Rad 9 adaptiert werden oder sich auf einer Messtafel 30 befinden, die am Rad 9 adaptiert wird.

Da sich das Rad 9 während der Bewegung des Fahrzeugs 1 dreht, ist es vorteilhaft, die Messpunkte 6 als Kugeln auszulegen, da sie unabhängig vom Drehwinkel des Rades 9 von der Kamera erfasst werden und damit beliebig lange Fahrwege ausgeführt werden können.

Möglich wäre auch eine pendelnd zur Schwerkraft am Rad 9 aufgehängte Messtafel 30 mit ebenen Messpunkten 6 zu verwenden, so dass die ebenen Messpunkte 6 unabhängig vom Drehwinkel des Rades 9 immer der Sichtachse 22 der Kamera 10 zugewandt sind. Damit sind ebenfalls längere Fahrwege möglich.

Das Fahrzeug 1 steht auf einem Messplatz 8. Auf einer Fahrbahnebene (Boden) 12 des Messplatzes 8 ist ein Passpunktsystem 14 aus wenigstens drei Messmerkmalen, insbesondere Messpunkten, 13, die nicht auf einer gemeinsamen Linie angeordnet sind, ausgebildet.

Vor dem Fahrzeug 1 ist eine bewegliche Kalibriereinrichtung 21 angeordnet, die zum Kalibrieren des Kraftfahrzeug-Umfeldsensors 2 ausgebildet ist.

Die Kalibriereinrichtung 21 hat ein Fahrgestell 18 und ein auf dem Fahrgestell 18 angeordnetes Target 17. Das Target 17 ist zur Wechselwirkung mit dem zu kalibrierenden Kraftfahrzeug-Umfeldsensor 2 ausgebildet.

Beispielsweise ist das Target 17 im Falle eines Radarsensors 2 mit einer Reflektorebene ausgebildet, die elektromagnetische Strahlung, insbesondere Radarstrahlung, reflektiert.

Zum Kalibrieren eines optischen Sensors 2 kann das Target 17 alternativ oder zusätzlich mit einem optischen Passpunktmuster ausgebildet sein.

Die Kalibriereinrichtung 21 umfasst darüber hinaus eine Kamera 10, die auf das Fahrzeug 1 ausgerichtet ist. Die Kamera 10 ist gegenüber dem Target 17 fixiert, so dass sich die Position und die Ausrichtung der Kamera 10 in Bezug auf das Target 17 nicht verändern.

Die feste Position und Ausrichtung der Kamera 10 in Bezug auf das Target 17 sind einer Auswerteeinrichtung 11, die über eine drahtgebundene oder drahtlose Verbindungsleitung 25 mit der Kamera 10 verbunden ist, bekannt.

Die Sichtachse 22 der Kamera 10 ist insbesondere so ausgerichtet, dass die Kamera 10 in der Lage ist, sowohl die auf der Fahrbahnebene 12 des Messplatzes 8 ausgebildeten Messmerkmale 13 des Passpunktsystems 14 als auch das wenigstens eine auf dem Fahrzeug 1 ausgebildete Messmerkmal 6 optisch zu erfassen.

Da der Auswerteeinrichtung 11 die Position und die Ausrichtung der Kamera 10 in Bezug auf das Target 17 bekannt sind, ist die Auswerteeinrichtung 11 in der Lage, aus einem von der Kamera 10 aufgenommenen Bild der Messmerkmale 13 des Passpunktsystems 14 die Position und die Ausrichtung der Kalibriereinrichtung 21 und insbesondere des Targets 17 auf dem Messplatz 8 zu bestimmen.

Die Auswerteeinrichtung 11 steuert eine Anzeigeeinheit 16 an, um Verfahrensschritte anzuzeigen, die notwendig sind, um die Kalibriereinrichtung 21 und insbesondere das Target 17 in einer gewünschten/benötigten Position auf dem Messplatz 8 auszurichten.

Während einer Anfahrt des Fahrzeugs 1 auf den Messplatz 8 in Richtung der Kalibriereinrichtung 21 wird von der Kamera 10 eine Bewegungsbahn des Messmerkmals 6 auf dem Fahrzeug 1 aufgezeichnet. Aus der so aufgezeichneten Bewegungsbahn bestimmt die Auswerteeinrichtung 11 eine Fahrachse 15 des Fahrzeugs 1.

Das Target 17 kann dann insbesondere orthogonal zur Fahrachse 15 des Fahrzeugs 1 ausgerichtet werden.

In einem Kalibriermodus erkennt der Kraftfahrzeug-Umfeldsensor 2 ein von dem Target 17 reflektiertes Signal (z.B. Radarstrahlung oder Licht) und gibt über eine in dem Kraftfahrzeug 1 angeordnete Umfeldsensor-Auswerteeinrichtung 23 Justagehinweise zum Justieren des Kraftfahrzeug-Umfeldsensors 2 aus.

Insbesondere kommuniziert die Umfeldsensor-Auswerteeinrichtung 23 des Kraftfahrzeugs 1 dabei über eine drahtlose oder drahtgebundene Datenverbindung 27 mit der Auswerteeinrichtung 11, so dass auf der Anzeigeeinheit 16 Justageinformationen für einen Servicetechniker darstellbar sind. Alternativ oder zusätzlich kann ein Montageroboter 29 vorgesehen sein, der auf die Justierschrauben des Abstandssensors 2 einwirkt, um den Abstandssensor 2 in der gewünschten Position und Orientierung auszurichten.

Da eine Verschiebung und/oder Drehung der Kalibriereinrichtung 21 zur Justage des Kraftfahrzeug-Umfeldsensors 2 erforderlich ist und die Kamera 10 an der Kalibriereinrichtung 21 selbst befestigt ist, werden zwangsläufig auch die Position und die Ausrichtung der Kamera 10 verändert.

Um die Bestimmung und kontinuierliche Überwachung der Position und der Ausrichtung der Kalibriereinrichtung 21 auf dem Messplatz 8 zu ermöglichen, dürfen die Messmerkmale 13 des Passpunktsystems 14 weder von dem Fahrzeug 1 noch von der Kalibriereinrichtung 21 verdeckt werden. Die Bewegungsspielräume der Kalibriereinrichtung 21 und des Fahrzeugs 1 sind durch diese Bedingung beschränkt.

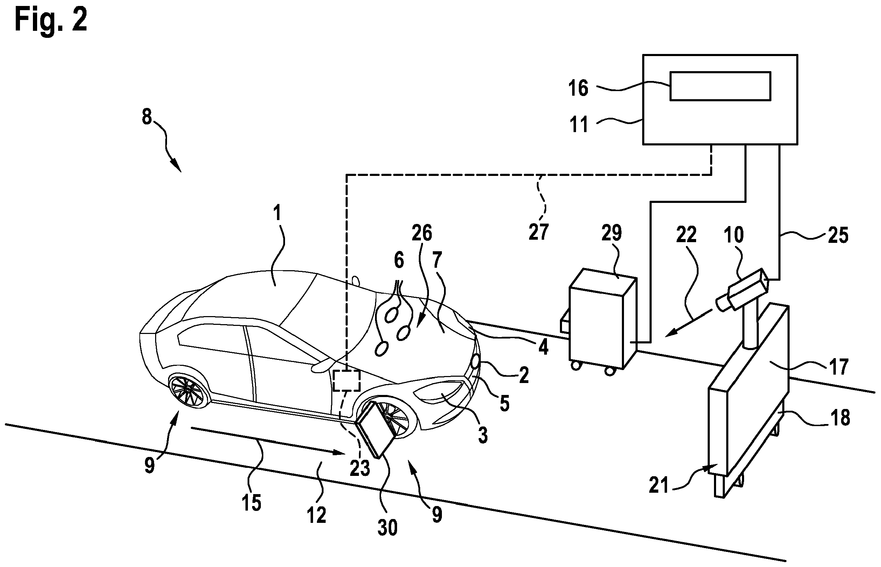

Figur 2 zeigt ein zweites Ausführungsbeispiel, bei dem keine Messmerkmale 13 auf der Fahrbahnebene 12 des Messplatzes 8 ausgebildet sind bzw. ausgebildet sein müssen.

Statt auf der Fahrbahnebene 12 angebrachten Messmerkmalen 13 ist im zweiten Ausführungsbeispiel ein Passpunktsystem 26 mit wenigstens drei Messmerkmalen 6 auf dem Fahrzeug 1 ausgebildet.

Sobald sich ein mit einem solchen Passpunktsystem 26 ausgestattetes Fahrzeug 1 auf dem Messplatz 8 im Blickfeld der Kamera 10 befindet, erfasst die Kamera 10 das auf dem Fahrzeug 1 ausgebildete Passpunktsystem 26 und ermöglicht es der Auswerteeinrichtung 11, die Position und die Ausrichtung der Kalibriereinrichtung 21 in Bezug auf das Fahrzeug 1 zu bestimmen.

Bei Bedarf können die Position und die Ausrichtung der Kalibriereinrichtung 21 gegenüber dem Fahrzeug 1 manuell oder mit Hilfe von an der Kalibriereinrichtung 21 ausgebildeten (in den Figuren nicht gezeigten) Motoren angepasst werden.

Während einer Anfahrt des Fahrzeugs 1 auf den Messplatz 8 in Richtung der Kalibriereinrichtung 21 wird von der Kamera 10 eine Bewegungsbahn wenigstens eines der Messmerkmale 6 aufgezeichnet und daraus von der Auswerteeinrichtung 11 die Fahrachse 15 des Fahrzeugs 1 bestimmt.

Der Kraftfahrzeug-Umfeldsensor 2 erkennt das von dem Target 17 reflektierte Signal (z.B. Radarstrahlung oder Licht) und gibt über eine in dem Kraftfahrzeug 1 angeordnete Auswerteeinrichtung 23 Justagehinweise aus und/oder steuert den Montageroboter 29 an, damit dieser auf die Justierschrauben des Abstandssensors 2 einwirkt, um den Abstandssensor 2 in der gewünschten Position und Orientierung auszurichten.

## Patentansprüche

1. Kalibriereinrichtung (21) zum Kalibrieren von Kraftfahrzeug-Umfeldsensoren (2), wobei die Kalibriereinrichtung (21) aufweist:
wenigstens ein Target (17), das zur Wechselwirkung mit wenigstens einem zu kalibrierenden Kraftfahrzeug-Umfeldsensor (2) ausgebildet ist; und
wenigstens eine Kamera (10), die zum optischen Erfassen eines Umfelds der Kalibriereinrichtung (21) ausgebildet ist;
wenigstens ein Messmerkmal (6), welches an wenigstens einem der Räder eines vor der Kalibriereinrichtung angeordneten Fahrzeugs (1) anbringbar ist, wobei sich das Messmerkmal (6) auf einer Messtafel befindet, die am Rad adaptierbar ist;
wobei die Kamera (10) ausgebildet und ausgerichtet ist, Bilder des wenigstens einen Messmerkmals (6) aufzunehmen, wobei die Position und die Ausrichtung der wenigstens einen Kamera (10) in Bezug auf das wenigstens eine Target (17) bekannt sind,
wobei das wenigstens eine Messmerkmal (6) als Kugel ausgelegt ist, so dass es unabhängig vom Raddrehwinkel von der Kamera erfasst wird.

2. Kalibriereinrichtung (21) nach Anspruch 1, wobei das wenigstens eine Target (17) eine Reflektorebene umfasst, die zur Reflexion elektromagnetischer Strahlung, insbesondere von Radarstrahlung, ausgebildet ist.

3. Kalibriereinrichtung (21) nach Anspruch 1 oder 2, wobei das wenigstens eine Target (17) eine Musterplatte umfasst, auf der ein optisch erfassbares Muster, insbesondere ein Passpunktmuster, ausgebildet ist.

4. Kalibriereinrichtung (21) nach einem der vorangehenden Ansprüche, wobei die wenigstens eine Kamera (10) ausgebildet und ausgerichtet ist, Bilder von Messmerkmalen (13) aufzunehmen, die an einem Messplatz (8), insbesondere auf einem Boden (12) eines Messplatzes (8), ausgebildet sind.

5. Verfahren zum Kalibrieren von Kraftfahrzeug-Umfeldsensoren (2), wobei das Verfahren umfasst:
ein Kraftfahrzeug (1) mit wenigstens einem Kraftfahrzeug-Umfeldsensor (2) auf einem Messplatz (8) zu platzieren;
eine Kalibriereinrichtung (21) nach einem der Ansprüche 1 bis 4 auf dem Messplatz (8) zu platzieren;
mehrere Messmerkmale (6) auf dem Fahrzeug (1) derart anzubringen, dass sie von der wenigstens einen Kamera (10) der Kalibriereinrichtung (21) optisch erfassbar sind, wobei sich ein Messmerkmal (6) auf einer Messtafel befindt, die am Rad adaptiert wird;
mit der wenigstens einen Kamera (10) der Kalibriereinrichtung (21) wenigstens ein Bild der auf dem Fahrzeug (1) angebrachten Messmerkmale (6) aufzunehmen;
durch Auswerten der von der wenigstens einen Kamera (10) aufgenommenen Bilder die Position der Kalibriereinrichtung (21) in Bezug auf das Kraftfahrzeug (1) zu bestimmen.

6. Verfahren zum Kalibrieren von Kraftfahrzeug-Umfeldsensoren (2) nach Anspruch 5, wobei das Verfahren zusätzlich umfasst:
das Fahrzeug (1) gegenüber der Kalibriereinrichtung (21) zu bewegen;
mit der wenigstens einen Kamera (10) der Kalibriereinrichtung (21) zu verschiedenen Zeitpunkten der Bewegung wenigstens zwei Bilder des auf dem Fahrzeug (1) angebrachten wenigstens einen Messmerkmals (6) aufzunehmen; und
durch Auswerten der von der wenigstens einen Kamera (10) aufgenommenen Bilder des wenigstens einen auf dem Fahrzeug (1) angebrachten Messmerkmals (6) eine Bewegungsbahn des Fahrzeugs (1) gegenüber der Kalibriereinrichtung (21) zu bestimmen;
vergleichen der auf diese Weise gewonnen Daten mit den von dem Kraftfahrzeug-Umfeldsensor gelieferten Daten, bestimmen von Abweichungen der Position und der Ausrichtung des Kraftfahrzeug-Umfeldsensors von vorgegebenen Solldaten, justieren und kalibrieren des Kraftfahrzeug-Umfeldsensors.

## Claims

1. Calibration device (21) for calibrating motor vehicle surround sensors (2), wherein the calibration device (21) has:
at least one target (17), which is embodied for interaction with at least one motor vehicle surround sensor (2) to be calibrated; and
at least one camera (10), which is embodied for optically capturing a surrounding area of the calibration device (21) ;
at least one measurement feature (6), which is able to be applied on at least one of the wheels of a vehicle (1) arranged in front of the calibration device, wherein the measurement feature (6) is located on an instrument panel that is fittable to the wheel;
wherein the camera (10) is embodied and aligned for recording images of the at least one measurement feature (6), wherein the position and the alignment of the at least one camera (10) relative to the at least one target (17) are known,
wherein the at least one measurement feature (6) is designed as a sphere in a manner such that it is captured by the camera independently of the rotational angle of the wheel.

2. Calibration device (21) according to Claim 1, wherein the at least one target (17) comprises a reflector plane, which is embodied for reflecting electromagnetic radiation, in particular radar radiation.

3. Calibration device (21) according to Claim 1 or 2, wherein the at least one target (17) comprises a patterned board, on which an optically capturable pattern is formed, in particular a control point pattern.

4. Calibration device (21) according to one of the preceding claims, wherein the at least one camera (10) is embodied and aligned for recording images of measurement features (13), which are formed at a measurement site (8), in particular on a ground area (12) of a measurement site (8).

5. Method for calibrating motor vehicle surround sensors (2), wherein the method comprises:
placing a motor vehicle (1) having at least one motor vehicle surround sensor (2) at a measurement site (8);
placing a calibration device (21) according to one of Claims 1 to 4 at the measurement site (8);
applying a plurality of measurement features (6) on the vehicle (1) in a manner such that they are optically capturable by the at least one camera (10) of the calibration device (21), wherein a measurement feature (6) is located on a measurement board that is fitted to the wheel;
recording at least one image of the measurement features (6) applied on the vehicle (1) using the at least one camera (10) of the calibration device (21);
determining the position of the calibration device (21) with respect to the motor vehicle (1) by evaluating the images recorded by the at least one camera (10).

6. Method for calibrating motor vehicle surround sensors (2) according to Claim 5, wherein the method additionally comprises:
moving the vehicle (1) with respect to the calibration device (21);
recording at least two images of the at least one measurement feature (6) applied on the vehicle (1) using the at least one camera (10) of the calibration device (21) at different points in time of the movement; and
determining a movement path of the vehicle (1) with respect to the calibration device (21) by evaluating the images, recorded by the at least one camera (10), of the at least one measurement feature (6) applied on the vehicle (1);
comparing the data obtained in this way with the data provided by the motor vehicle surround sensor, determining deviations of the position and the alignment of the motor vehicle surround sensor from predefined specified data, adjusting and calibrating the motor vehicle surround sensor.

## Revendications

1. Dispositif d'étalonnage (21) destiné à étalonner des capteurs d'environnement de véhicule automobile (2), le dispositif d'étalonnage (21) comprenant :
au moins une cible (17) conçue pour interagir avec au moins un capteur d'environnement de véhicule automobile (2) à étalonner ; et
au moins une caméra (10) conçue pour détecter optiquement l'environnement du dispositif d'étalonnage (21) ;
au moins un élément de mesure (6) qi peut être fixé à au moins une des roues d'un véhicule (1) disposé devant le dispositif d'étalonnage, l'élément de mesure (6) étant situé sur une plaque de mesure qui est adaptable sur la roue ;
la caméra (10) étant conçue et orientée pour acquérir des images de l'au moins un élément de mesure (6), la position et l'orientation de l'au moins une caméra (10) par rapport à l'au moins une cible (17) étant connues,
l'au moins un élément de mesure (6) étant conçu comme une sphère de sorte qu'il soit détecté par la caméra indépendamment de l'angle de rotation de la roue.

2. Dispositif d'étalonnage (21) selon la revendication 1, l'au moins une cible (17) comprenant un plan réflecteur qui est conçu pour réfléchir un rayonnement électromagnétique, en particulier un rayonnement radar.

3. Dispositif d'étalonnage (21) selon la revendication 1 ou 2, l'au moins une cible (17) comprenant une plaque de motif sur laquelle est formé un motif détectable optiquement, en particulier un motif de points de calibrage.

4. Dispositif d'étalonnage (21) selon l'une des revendications précédentes, l'au moins une caméra (10) étant conçue et orientée pour acquérir des images d'éléments de mesure (13) qui sont formés à un emplacement de mesure (8), en particulier sur un fond (12) d'un emplacement de mesure (8).

5. Procédé d'étalonnage de capteurs d'environnement de véhicule automobile (2), le procédé comprenant les étapes suivantes :
placer un véhicule automobile (1) muni d'au moins un capteur d'environnement de véhicule automobile (2) sur un emplacement de mesure (8) ;
placer un dispositif d'étalonnage (21) selon l'une des revendications 1 à 4 sur l'emplacement de mesure (8) ;
fixer plusieurs éléments de mesure (6) sur le véhicule (1) de manière à ce qu'ils puissent être détectés optiquement par l'au moins une caméra (10) du dispositif d'étalonnage (21), un élément de mesure (6) étant situé sur une plaque de mesure qui est adaptée à la roue ;
acquérir avec l'au moins une caméra (10) du dispositif d'étalonnage (21) au moins une image des éléments de mesure (6) fixés au véhicule (1) ;
déterminer la position du dispositif d'étalonnage (21) par rapport au véhicule automobile (1) par évaluation des images acquises par l'au moins une caméra (10).

6. Procédé d'étalonnage de capteurs d'environnement de véhicule automobile (2) selon la revendication 5, le procédé comprenant en outre les étapes suivantes :
déplacer le véhicule (1) par rapport au dispositif d'étalonnage (21) ;
acquérir avec l'au moins une caméra (10) du dispositif d'étalonnage (21) au moins deux images de l'au moins un élément de mesure (6) fixé au véhicule (1) à différents instants du mouvement ; et
déterminer une trajectoire du véhicule (1) par rapport au dispositif d'étalonnage (21) par évaluation des images, acquises par l'au moins une caméra (10), de l'au moins un élément de mesure (6) fixé au véhicule (1) ;
comparer les données ainsi obtenues aux données fournies par le capteur d'environnement de véhicule automobile, déterminer les écarts de position et d'orientation du capteur d'environnement de véhicule automobile par rapport à des données de consigne spécifiées, régler et étalonner le capteur d'environnement de véhicule automobile.
